(19) **Europäisches Patentamt European Patent Office Office européen des brevets**

(11) **EP 4 683 352 A1**

(12) **EUROPEAN PATENT APPLICATION**

(43) Date of publication:
21.01.2026 Bulletin 2026/04

(21) Application number: 25186951.7

(22) Date of filing: 02.07.2025

(51) International Patent Classification (IPC):
*H04S 7/00* (2006.01)  *G06T 7/50* (2017.01)
*G06T 7/70* (2017.01)

(52) Cooperative Patent Classification (CPC):
**H04S 7/301**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 17.07.2024 CN 202410963438

(71) Applicant: **Harman International Industries, Inc. Stamford, Connecticut 06901 (US)**

(72) Inventors:
• **ZHOU, Dafeng**
  **Stamford, CT, 06901 (US)**
• **ZHENG, Jianwen**
  **Stamford, CT, 06901 (US)**

(74) Representative: **Westphal, Mussgnug & Partner, Patentanwälte mbB**
  **Werinherstraße 79**
  **81541 München (DE)**

(54) **METHOD, APPARATUS, AND ELECTRONIC DEVICE FOR DETERMINING SPEAKER ARRANGEMENT IN PREDETERMINED SPACE**

(57)  A method, an apparatus, and an electronic device for determining a speaker arrangement in a predetermined space are provided. The method may include: acquiring one or more images, where the one or more images are captured by an image capture device at a predetermined position in the predetermined space and each of the plurality of speakers is included in at least one of the one or more images; determining, for each of the one or more images, a distance between a speaker included in the image and the predetermined position based on an image height and a nominal height of the speaker included in the image and a focal length of the image capture device; determining distances between every two adjacent speakers of the plurality of speakers; and determining the speaker arrangement based on the distance between the speaker included in each of the one or more images and the predetermined position and the distances between every two adjacent speakers.

EP 4 683 352 A1

## Description

## Technical Field

The present disclosure relates to the field of audio processing, and more particularly, to a method, an apparatus, and an electronic device for determining a speaker arrangement of a plurality of speakers in a predetermined space.

## Background

Currently, multi-channel, immersive, or other spatial audio formats require users to strictly place a plurality of speakers in a symmetric manner and/or according to standards applicable to specific audio formats to achieve an optimal experience. For example, on the Dolby website, setup guidelines for each speaker provide highly detailed descriptions of the positions and angles of all speakers in an audio system. However, for typical home setups of users, the physical space of the home setups may not support such an optimal speaker arrangement.

When consumers set up a multi-channel audio system, they often need to calibrate the speakers to ensure satisfactory sound performance at the listening position, as the speaker arrangement may deviate from the optimal configuration. Furthermore, current trends demand that different speakers can be freely combined and function together as a multi-channel system, which significantly differs from traditional home theaters that typically use identical speakers for surround sound.

Therefore, in such scenarios, there is a need for a convenient calibration scheme for the arrangement of a plurality of speakers within a predetermined space (e.g., a family living room, a home theater, etc.).

## Summary of the Invention

According to various aspects of the present disclosure, a method for determining a speaker arrangement of a plurality of speakers in a predetermined space is provided. The method may include: acquiring one or more images, where the one or more images are captured by an image capture device at a predetermined position in the predetermined space and each of the plurality of speakers is included in at least one of the one or more images; determining, for each of the one or more images, a distance between a speaker in the image and the predetermined position based on an image height and a nominal height of the speaker in the image and a focal length of the image capture device; determining distances between every two adjacent speakers of the plurality of speakers; and determining the speaker arrangement based on a distance between each of the plurality of speakers and the predetermined position and the distances between every two adjacent speakers.

According to various aspects of the present disclosure, an audio calibration method for a speaker system is further provided, where the speaker system includes a plurality of speakers disposed in a predetermined space, and the method is executed at each of the plurality of speakers or at an audio manager configured to manage the plurality of speakers, and includes: acquiring a speaker arrangement of the plurality of speakers, the speaker arrangement being determined according to the method described above; and processing an input audio signal based on the speaker arrangement such that a processed audio signal is output at each speaker.

According to various aspects of the present disclosure, an electronic device is further provided. The electronic device may include: an image capture device configured to acquire, at a predetermined position in a predetermined space, one or more images for a plurality of speakers, where each of the plurality of speakers is included in at least one of the one or more images; one or more processors; and one or more memories having computer-readable instructions stored thereon, where the computer-readable instructions, when executed by the one or more processors, cause the one or more processors to: acquire the one or more images; determine, for each of the one or more images, a distance between a speaker in the image and the predetermined position based on an image height and a nominal height of the speaker in the image and a focal length of the image capture device; determine distances between every two adjacent speakers of the plurality of speakers; and determine the speaker arrangement based on a distance between each of the plurality of speakers and the predetermined position and the distances between every two adjacent speakers.

According to various aspects of the present disclosure, an apparatus for determining a speaker arrangement of a plurality of speakers in a predetermined space is further provided. The apparatus may include an acquisition module, a distance determination module, and an arrangement determination module. The acquisition module may acquire one or more images, where the one or more images are captured by an image capture device at a predetermined position in the predetermined space and each of the plurality of speakers is included in at least one of the one or more images. The distance determination module may determine, for each of the one or more images, a distance between a speaker in the image and the predetermined position based on an image height and a nominal height of the speaker included in the image and a focal length of the image capture device; and determine distances between every two adjacent speakers of the plurality of speakers. The arrangement determination module may determine the speaker arrangement based on a distance between each of the plurality of speakers and the predetermined position and the distances between every two adjacent speakers.

According to various aspects of the present disclosure, an audio calibration apparatus for a speaker system is further provided, where the speaker system includes a plurality of speakers disposed in a predetermined space, and the apparatus may be each of the plurality of speakers or an audio manager configured to manage the plurality of speakers and may include: an acquisition module configured to acquire a speaker arrangement of the plurality of speakers, the speaker arrangement being determined according to the method described above; and a processing module configured to process an input audio signal based on the speaker arrangement such that a processed audio signal is output at each speaker.

Therefore, according to the method for determining a speaker arrangement of the present disclosure, by performing image capture for a plurality of speakers and determining a distance between each speaker and a listening position through image analysis, and further determining distances between the speakers, the current actual speaker arrangement can be obtained for adjusting output audio signals of the speakers. Furthermore, this method utilizes an image capture device to capture images and performs image analysis and geometric calculations via a processor without playing any noise or tones, thereby reducing costs. Additionally, since the determined speaker arrangement is the current actual arrangement and also considers the listening position, applying this speaker arrangement to audio calibration can achieve superior sound effects at the listening position.

## Description of the Drawings

FIG. 1 illustrates an example of an audio system including a plurality of speakers according to various aspects of the present disclosure.

FIGS. 2A and 2B illustrate planar schematic diagrams of application scenarios for a scheme of determining a speaker arrangement of a plurality of speakers in a predetermined space according to various aspects of the present disclosure.

FIG. 3 illustrates a flowchart of a method for determining a speaker arrangement of a plurality of speakers in a predetermined space according to various aspects of the present disclosure.

FIG. 4 illustrates the principle of optical lens imaging.

FIG. 5 illustrates a schematic diagram of determining a distance between a first speaker and a second speaker according to various aspects of the present disclosure.

FIG. 6 illustrates a schematic diagram of determining a distance between a first speaker and a second speaker according to various aspects of the present disclosure.

FIG. 7 illustrates a flowchart of an audio calibration method for a speaker system according to various aspects of the present disclosure.

FIG. 8 illustrates a structural block diagram of an apparatus for determining a speaker arrangement of a plurality of speakers in a predetermined space according to various aspects of the present disclosure.

## Detailed Description

Regarding the accompanying drawings, several illustrative embodiments are described, which form part of the specification. Although specific embodiments that may implement one or more aspects of the present disclosure are described below, other embodiments may be used and various modifications may be made without departing from the scope of the present disclosure or the spirit of the appended claims.

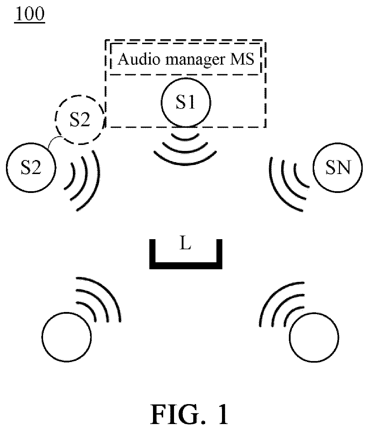

FIG. 1 illustrates an example of an audio system including a plurality of speakers according to various aspects of the present disclosure.

As shown in FIG. 1, the audio system 100 may include a plurality of speakers (S1, S2, ..., SN) disposed in a room, and optionally an audio manager MS (a hardware circuit and a combination of hardware and software with processing functions), which may be independent of the plurality of speakers or may be integrated into one of the speakers (e.g., S1). The plurality of speakers are placed according to a standard arrangement and each outputs corresponding processed audio signals based on input audio signals. These processed audio signals may provide multi-channel audio effects to a user at a predetermined listening position L in the room. It should be noted that although five speakers are illustrated in the figure, those skilled in the art will understand that the number of speakers may vary depending on different multi-channel audio data from audio sources.

However, as previously mentioned, the arrangement of the plurality of speakers may deviate from the optimal speaker arrangement (standard arrangement). For example, as shown in FIG. 1, the position of speaker S2 (indicated by dashed lines) may be offset from the standard position. Since different speaker arrangements require different processed audio signals to be output by each speaker to achieve optimal listening effects, it is necessary to consider the current actual speaker arrangement when generating the processed audio signals to be output by each speaker, i.e., the speaker arrangement needs be calibrated.

Existing calibration schemes for speaker arrangements are typically implemented based on microphones. The microphones may be integrated into the speakers or external microphones may be used. In microphone-based calibration schemes, speakers are required to emit some continuous or impulse noise signals (e.g., play some tones), and the microphones are used to collect sound from the speakers to analyze distances between the speakers. However, such calibration schemes for a speaker arrangement require additional arrangement of microphones, and the calibration process involve noise and is inconvenient for use, and further, such calibration methods for speaker arrangements do not account for the listening position and the listening orientation. In practice, however, the listening position and the listening orientation may change during a user's actual use of the audio system.

Therefore, there is a need for a method for determining a speaker arrangement to address the issues present in the aforementioned microphone-based calibration schemes.

In various aspects of the present disclosure, the speaker arrangement may be determined based on analysis of captured images related to the speakers in combination with other easily obtainable dimensional data. Thus, according to this scheme, soundless calibration can be achieved without requiring additional arrangement of microphones, while also reducing costs. Additionally, image capture may be performed using a camera of a terminal device (e.g., a smartphone) at the current listening position (assuming that the listening position remains fixed during each image capture process targeting the plurality of speakers), and a processor of the terminal device may be utilized to analyze and compute the captured images, thereby determining the speaker arrangement. For example, an application (APP) operable on the terminal device may be designed. When running under the control of the processor, this application may invoke the camera application of the terminal device to utilize the camera of the terminal device to perform capture with respect to speakers within the predetermined space. In addition, the processor may then acquire the captured image data, process the captured image data, and further use it to determine the current speaker arrangement. Therefore, the speaker arrangement determined through this method is based on the current listening position, eliminating the need to fix the listening position at a standard location. In other words, the listening position may vary according to actual needs, and the speaker layout need only be re-determined after each change. Furthermore, after determining the speaker arrangement, the user may also designate one of the speakers (e.g., via the user interface of the terminal device) to be of a type of a central speaker (corresponding to an audio channel), thereby enabling the terminal device to determine the corresponding type of each speaker. Alternatively, in some cases, the terminal device (or an audio manager or speaker that has acquired the speaker arrangement) may determine one of the speakers to be of a type of a central speaker according to the speaker arrangement. In this case, the listening orientation may be regarded as the orientation from the listening position to the central speaker.

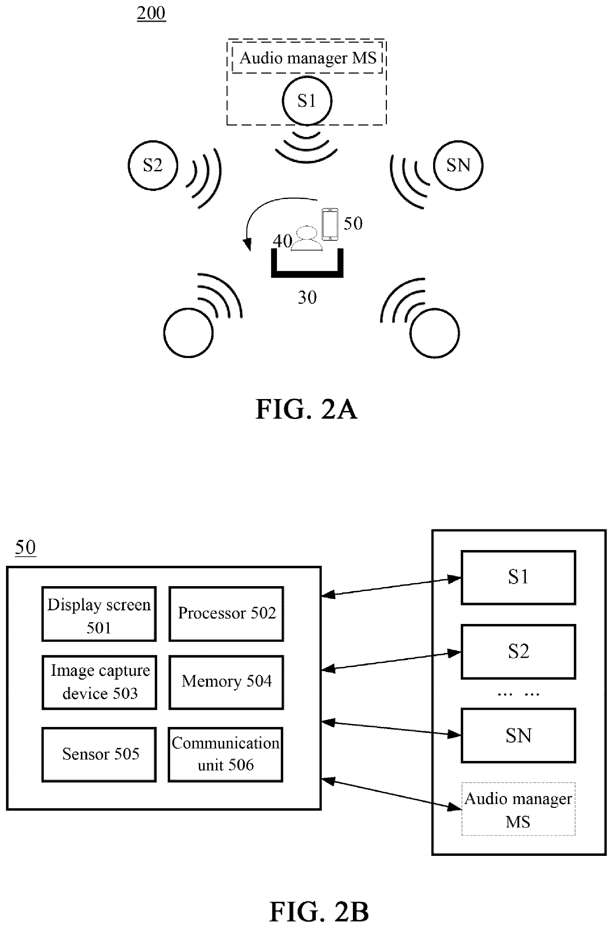

FIGS. 2A and 2B illustrate planar schematic diagrams of application scenarios for a scheme of determining a speaker arrangement of a plurality of speakers in a predetermined space according to various aspects of the present disclosure.

As shown in FIGS. 2A and 2B, in the scenario 200, a plurality of speakers (S1, S2, ..., SN) of an audio system 20 (e.g., the audio system 100 shown in FIG. 1) and a listening position 30 may be arranged in a predetermined space. A user 40 is located at the listening position 30 and possesses a terminal device 50 associated with the user.

Image capture of the plurality of speakers (21, 22, ..., 2N) may be sequentially performed using an image capture device 503 (such as a camera) on the terminal device 50 through rotation of the terminal device 50 in the horizontal direction (for example, the user holds the terminal device 50 at the listening position 30 to perform horizontal rotation, with the pitch angle and roll angle remaining unchanged during the rotation process), for example, in response to a user command to launch an application, thereby invoking the camera application. For example, image capture may be performed individually for each of the plurality of speakers (21, 22, ..., 2N), meaning that images are in one-to-one correspondence with speakers. In this case, for example, an image capture frame may be displayed in a predetermined area on the display screen 501 of the terminal device 50, such that when the user captures images for each of the plurality of speakers, the currently targeted speaker is placed within the image capture frame, thereby ensuring that the area on each captured image that is occupied by the speaker in the image remains substantially consistent to improve the accuracy of subsequent calculations. Alternatively, each captured image may include two or more speakers, that is, each image may correspond to two or more speakers. For different correspondence methods between images and speakers, different calculation methods for distances between speakers are required, which will be described in detail later.

A processor 502 of the terminal device 50 may analyze the images captured by the terminal device 50 to determine the physical distance between each speaker and the current listening position L as well as the distances between adjacent speakers, thereby determining the speaker arrangement. After the speaker arrangement is determined, the user may designate a central speaker, or in some cases, the central speaker may also be determined by the terminal device, the audio manager, or the speakers based on this speaker arrangement. Additionally, some angle information is required during the calculation of distances. Therefore, the terminal device 50 may also be provided with some sensors 505, such that it can be used for sensing angles or orientations, and the like. A memory 504 of the terminal device 50 may store various computer-readable instructions/code and various data to perform required operations.

Furthermore, as shown in FIG. 2B, the terminal device 50 may further include a communication unit 506 such that it can establish communication connections with the speakers or with an audio manager that can manage the speakers, thereby providing the determined speaker arrangement. In this way, each speaker or the audio manager may process input audio signals based on the speaker arrangement to obtain processed audio signals for output by the speakers, thereby achieving improved sound effects at the listening position. The input audio signals to the audio manager may be audio signals (for example, multi-channel audio signals) from an audio source, and the audio manager may process the audio signals based on the determined speaker arrangement to determine the audio signals sent to each speaker, such that each speaker can perform playback according to the received audio signals. On the other hand, each speaker has certain audio processing functions. It may be provided with audio signals for a corresponding audio channel and process the audio signals for this corresponding audio channel based on the speaker arrangement to obtain processed audio signals corresponding to its position in the current speaker arrangement, and then play the processed audio signals.

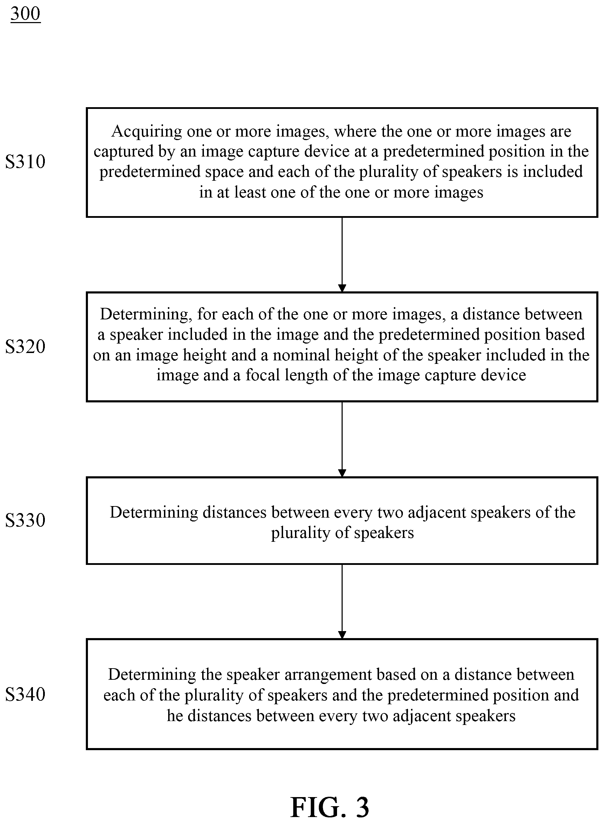

The following sections describe in detail the scheme for determining a speaker arrangement of a plurality of speakers in a predetermined space in conjunction with the present disclosure with reference to FIGS. 3-8.

FIG. 3 illustrates a flowchart of a method for determining a speaker arrangement of a plurality of speakers in a predetermined space according to various aspects of the present disclosure. Optionally, the method may be executed by the terminal device shown in FIG. 2B.

The plurality of speakers mentioned in the context of the present disclosure refers to speakers in the predetermined space that are currently intended for playback, which have already been selected. There may be a plurality of candidate speakers in the predetermined space. For example, when a first multi-channel audio signal needs to be played, a first set of candidate speakers may serve as the plurality of speakers intended for playback, and when a second multi-channel audio signal needs to be played, a second set of candidate speakers may serve as the plurality of speakers intended for playback.

As shown in FIG. 3, in step S310, one or more images are acquired, where the one or more images are captured by an image capture device at a predetermined position in the predetermined space and each of the plurality of speakers is included in at least one of the one or more images.

Optionally, as mentioned earlier, the image capture device may be a camera integrated in the terminal device. For example, during the image capturing process, the image capture device rotates in the horizontal direction with the listening position as the center to perform image capture for all speakers. The images captured by the image capture device may be stored (for example, stored in a memory of the terminal device). Additionally, the image capture device may capture one image for each of all the speakers or capture one image for two or more speakers.

In step S320, for each of the one or more images, a distance between a speaker included in the image and the predetermined position is determined based on an image height and a nominal height of the speaker included in the image and a focal length of the image capture device;

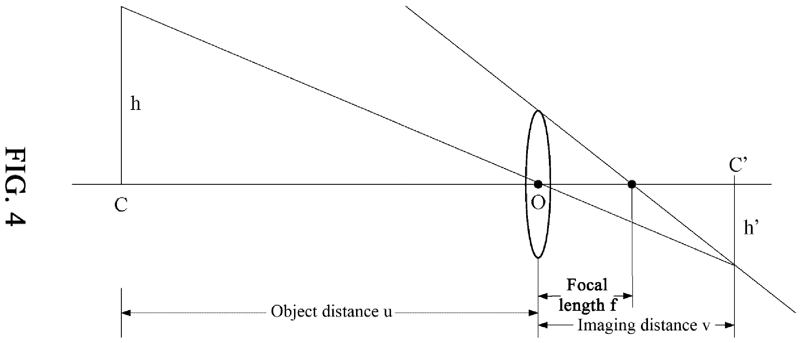

For example, to facilitate explanation, FIG. 4 illustrates the principle of optical lens imaging. In FIG. 4, the horizontal distance OC (actual distance) between the object and the center point O of the lens is denoted as u and the imaging distance OC' in the horizontal direction is denoted as v, the actual height is denoted as h, the height in the image (image height) is denoted as h', and the focal length is denoted as f. The following equations hold:

$$h/h' = u/v \quad (1)$$

$$1/u + 1/v = 1/f \quad (2)$$

Thus, by equivalently transforming the above equations, the following equation can be derived:

$$u = f * (1 + h/h') \quad (3)$$

That is, if the focal length f of the lens, and the actual height h and the imaging height h' of the object are known, the distance between the object and the center of the lens can be determined.

In the application scenarios of the present disclosure, the focal length of the image capture device may be known according to the specification parameters of the image capture device, and the height of the speaker in the image (image height) can also be determined through image analysis. Additionally, if the actual height of each speaker is known, the distance between the speaker and the image capture device (essentially equivalent to the listening position) can be calculated.

Optionally, the actual height of the speaker is also referred to as the nominal height, which may be obtained through the following approaches. One approach includes, for each of the plurality of speakers, acquiring, based on a speaker model of the speaker input by a user, a nominal height corresponding to the speaker model from a database. Another approach includes, for each of the plurality of speakers, performing object recognition on an image containing the speaker to obtain a speaker model of the speaker, and acquiring a nominal height corresponding to the speaker model from the database based on the speaker model. In practical applications, common speaker models are known, and accordingly, the parameters corresponding to each model (e.g., dimensional data, specifications, etc.) are also known. Therefore, a database can be established in which parameters of speakers of various models are stored. Therefore, when the nominal height of a speaker needs to be acquired, the user may input the model of the current speaker using the user interface or other input apparatuses of the terminal device. Consequently, after obtaining the model of the speaker input by the user, the terminal device may extract the corresponding parameters (including the nominal height) from the database based on the model. Alternatively, recognition may be performed on the image based on object recognition technologies, for example, a pre-trained neural network model (e.g., trained through supervised learning with a plurality of categories of training samples), so as to recognize the model of the corresponding speaker from the image, thereby enabling extraction of the corresponding parameters (including the nominal height) from the database based on the recognized model.

Therefore, the distance between the speaker and the image capture device (equivalent to the listening position) can be calculated based on the aforementioned Equation (3) based on the nominal height and the image height of the speaker and the focal length of the image capture device.

As mentioned earlier, the number of speakers included in an image may be two or more, then the distance between each of these speakers and the image capture device (equivalent to the listening position) can be determined separately for each of the speakers using the aforementioned equation.

Returning to FIG. 3, in step S330, distances between every two adjacent speakers among the plurality of speakers are determined.

After determining the distance between each speaker and the image capture device (equivalent to the listening position) as described above, it is further required to determine the distances between every two speakers (e.g., the distances between every two adjacent speakers) to obtain the final speaker arrangement.

Different determination methods may be adopted depending on the correspondence between images and speakers.

In a first case, the image capture device sequentially captures a plurality of images during rotation, and each of the plurality of images includes one speaker (e.g., an image capture frame may be displayed on the user interface during image capture to define a predetermined image area, such that the speaker is positioned within this area). For every two sequentially captured images among the plurality of images (corresponding to two adjacent speakers), information about a rotation angle traversed during capture of the two images may be acquired from an angle sensor (e.g., a gyroscope sensor) associated with the image capture device. In addition, a distance between speakers included in the two images is determined based on the information about the rotation angle and distances between the speakers included in the two images and the predetermined position.

For example, the image capture device may be integrated with the angle sensor, both of which, for example, may be incorporated into the terminal device. Thus, when the image capture device rotates, the angle sensor can sense the rotation angle and correspondingly output rotation angle information. The rotation angle information can then be combined with the distances between two speakers in the corresponding two images and the predetermined position, thereby determining the distance between the two speakers.

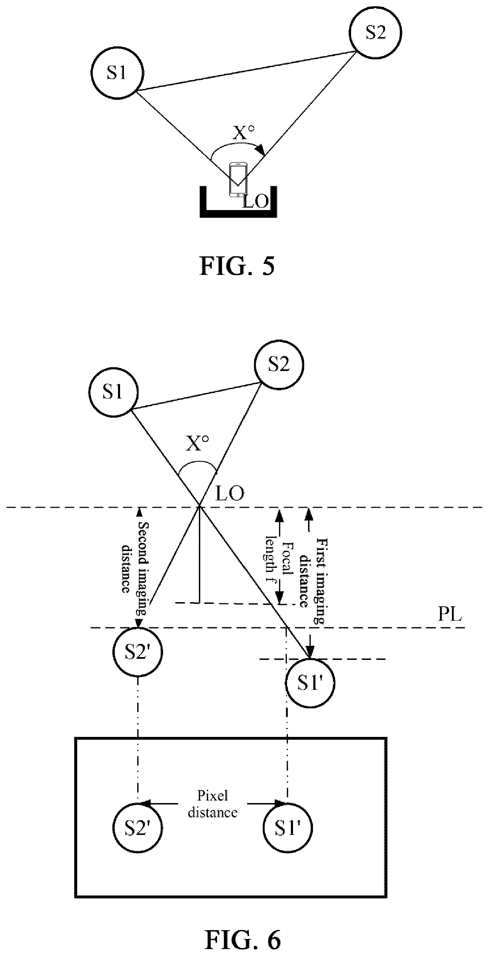

For example, in the plan view shown in FIG. 5, the rotation angle by which the image capture device rotates from the first speaker S1 to the second speaker S2 is X° (rotation on the same horizontal plane). Therefore, based on the length of the line segment LO-S1 and the length of the line segment LO-S2, the distance between the first speaker S1 and the second speaker S2 is determined using geometric principles.

Alternatively, instead of the angle sensor, a sensor capable of sensing orientations (e.g., an orientation sensor) may be used to sense an orientation of the image capture device when capturing each of the plurality of images. Therefore, the orientation of the image capture device when capturing each of the plurality of images can be acquired, and an angle difference between the orientations corresponding to every two images can be determined; and for every two images, the distance between speakers included in the two images (including the distance between every two adjacent speakers) can be determined based on the angle difference between the orientations corresponding to the two images and the distances between the speakers included in the two images and the predetermined position.

Additionally, in a second case, at least two adjacent speakers including a first speaker and a second speaker may be included in a first image (the number of which may be at least one) captured by the image capture device. Therefore, a pixel distance on the first image between the first speaker and the second speaker that are adjacent in the first image; may first be determined, an included angle between a first connection line from the first speaker to the predetermined position and a second connection line from the second speaker to the predetermined position may be determined based on the pixel distance and a position of an imaging plane of the image capture device; and a distance between the first speaker and the second speaker that are adjacent may be determined based on the included angle, a first distance between the first speaker and the predetermined position, and a second distance between the second speaker and the predetermined position.

For example, as shown in FIG. 6, in a case where the imaging plane distance (the distance from the imaging plane to the lens center of the camera of the image capture device) is determined, in the figure, taking the imaging plane being PL (its distance from the lens center is a second imaging distance, but other values are possible) as an example, the pixel distance between the first speaker and the second speaker in the obtained image can be determined. Based on the imaging plane distance and the pixel distance between the first speaker and the second speaker, the included angle between the connection line LO-S2' and the connection line LO-S1' can be determined based on triangle properties, where this included angle is the same as the included angle between the connection lines from the first speaker and the second speaker to the predetermined position.

In step S340, the speaker arrangement is determined based on a distance between each of the plurality of speakers and the predetermined position and the distances between every two adjacent speakers.

In other words, after determining both the distances between every two speakers and the distance from each speaker to the predetermined position (image capture device), the positional topology of the plurality of speakers relative to the predetermined position can be obtained.

Optionally, after determining the speaker arrangement, the method may further include determining one of the speakers as a designated type of speaker (e.g., a central speaker) based on user input. For example, a schematic diagram of the currently determined speaker topology and the listening position may be presented on the user interface of the terminal device, and in response to information input by the user with respect to the central speaker, the selected speaker is determined as the central speaker. Consequently, after determining the central speaker, the method may further determine, for each of the remaining speakers, an audio channel corresponding to each of the plurality of speakers based on standard channel definition rules and relative positional relationships between the other speakers in the speaker arrangement and the central speaker. Alternatively, in some cases, the determination of the central speaker may also be based on the speaker arrangement. Additionally, this determination may be performed at the audio manager or each speaker. For example, the terminal device may communicate the speaker arrangement to the audio manager or each speaker, enabling the audio manager or each speaker to determine the central speaker based on the topological structure of the speaker arrangement. In addition, for each of the remaining speakers, the audio channel corresponding to each speaker is determined based on standard channel definition rules and the relative positional relationship between each speaker and the central speaker.

For example, after determining the central speaker, according to standard channel definition rules, the left surround channel and the left surround channel are positioned to the left of the central channel, with the left surround channel having a larger counterclockwise angle relative to the left channel. Similarly, the right surround channel and the right surround channel follow analogous arrangements, but with different clockwise angles. For other channel configurations with more than two channels, there may also exist corresponding standard channel definitions, and thus an audio channel corresponding to each speaker can be determined accordingly.

Therefore, through the method for determining the speaker arrangement as described with reference to FIGS. 2A-6, which involves image capture for the plurality of speakers, image analysis to determine the distance between each speaker and the listening position, and further determination of distances between speakers, a speaker arrangement incorporating the listening position can be obtained. In addition, this method utilizes an image capture device to capture images and performs image analysis and geometric calculations via a processor without playing any noise or tones, thereby reducing costs. Furthermore, since the resulting speaker arrangement further accounts for the listening position, when applied to audio calibration, this speaker arrangement enables calibration of volume (signal gain), delay, and sound field coherence.

According to some other aspects of the present disclosure, after obtaining the actual speaker arrangement, audio calibration may be performed based on the speaker arrangement, thereby achieving superior sound effects at the current listening position. Thus, the present disclosure further provides an audio calibration method.

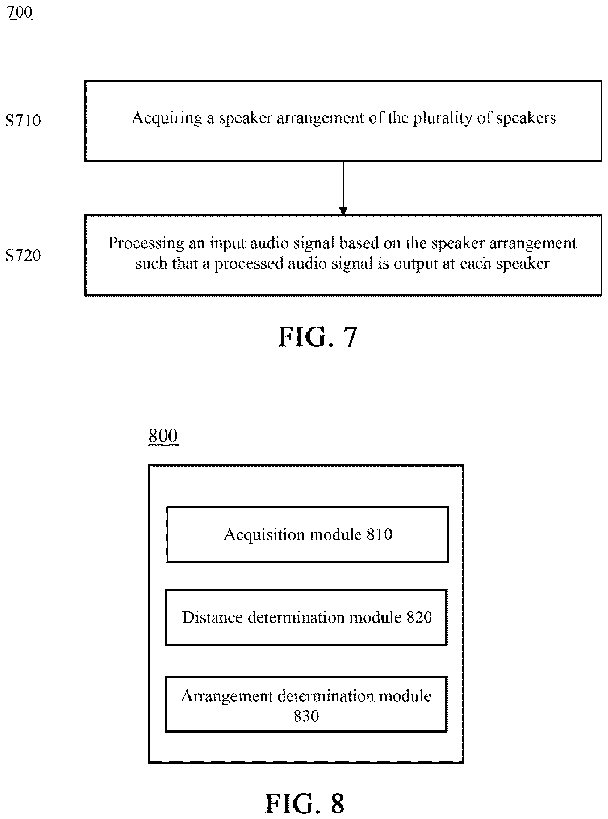

FIG. 7 illustrates a flowchart of an audio calibration method for a speaker system according to various aspects of the present disclosure. Optionally, the method may be executed by each speaker shown in FIG. 2A or a control apparatus (e.g., an audio manager) configured to manage the speakers. The speaker system may include a plurality of speakers selected from a plurality of candidate speakers disposed in a predetermined space.

As shown in FIG. 7, in step S710, a speaker arrangement of the plurality of speakers is acquired.

For example, the speaker arrangement may be determined based on the method described earlier with reference to FIGS. 2A-6.

In step S720, an input audio signal is processed based on the speaker arrangement such that a processed audio signal is output at each speaker.

For example, when the method is executed at each of the plurality of speakers, each of the plurality of speakers may acquire the speaker arrangement (e.g., via a communication connection with a terminal device determining the speaker arrangement). The acquired speaker arrangement may further include information indicating the audio channel corresponding to each speaker. The speaker may process an input audio signal of the corresponding audio channel based on the speaker arrangement to obtain the processed audio signal. Alternatively, in some embodiments, the speaker arrangement may only include information indicating the audio channel corresponding to one or some speakers. After receiving the speaker arrangement, each speaker may determine its corresponding audio channel based on standard channel definition rules and its relative positional relationship with the designated type of speaker in the speaker arrangement. It may then process an input audio signal of the corresponding audio channel to obtain the processed audio signal.

As another example, when the method is executed at the audio manager configured to manage the plurality of speakers, the audio manager may acquire the speaker arrangement and process input audio signals from an audio source based on the speaker arrangement to output the processed audio signal of the corresponding audio channel to each of the plurality of speakers.

Additionally, since the distance from each speaker to the listening position varies, the volume of each speaker may be adjusted, and it can be ensured that the volume and the delay can be adjusted to a good sound field at the listening position. That is, for each of the plurality of speakers, the processed audio signal output by the speaker is subjected to a delay and/or gain, and the delay and/or gain are based on the distance between the speaker and the predetermined position.

For example, speaker S2 is farther from the listener than speaker S1. A user at the listening position corresponding to the speaker arrangement may perceive sound from speaker S2 as overly soft and delayed, while perceiving sound from speaker S1 as excessively loud. In this case, the volume of speaker S2 will be increased (gain boosted), while the volume of speaker S1 will be reduced (gain attenuated). Furthermore, a delay will be automatically added to the signals of speaker S1 to balance the sound between the left and right speakers.

Therefore, since this audio calibration method can adjust the audio signals output by each speaker based on the actual speaker arrangement, superior sound effects can be achieved at the listening position corresponding to the current speaker arrangement, thereby enhancing user experience.

According to various aspects of the present disclosure, an apparatus for determining a speaker arrangement of a plurality of speakers in a predetermined space is further provided.

FIG. 8 illustrates a structural block diagram of an apparatus for determining a speaker arrangement of a plurality of speakers in a predetermined space according to various aspects of the present disclosure. The apparatus may be, for example, the terminal device shown in FIG. 2B or a part thereof.

As shown in FIG. 8, the apparatus 800 may include an acquisition module 810, a distance determination module 820, and an arrangement determination module 830.

The acquisition module 810 may acquire one or more images, where the one or more images are captured by an image capture device at a predetermined position in the predetermined space and each of the plurality of speakers is included in at least one of the one or more images.

The distance determination module 820 may determine, for each of the one or more images, a distance between a speaker in the image and the predetermined position based on an image height and a nominal height of the speaker included in the image and a focal length of the image capture device; and determine distances between every two adjacent speakers of the plurality of speakers.

The arrangement determination module 830 may determine the speaker arrangement based on a distance between each of the plurality of speakers and the predetermined position and the distances between every two adjacent speakers.

Further details of the operations performed by each module may refer to the descriptions provided earlier with reference to FIGS. 2A-6 and will not be repeated here.

Additionally, although the above modules are illustrated in FIG. 8 by way of example, it should be understood that the apparatus 800 may be divided into more or fewer modules based on different functions or additional required functionalities. For example, it may further include a display module, a communication module, a sensor module, etc., or each module may be divided into further sub-modules. In some example implementations, each module or subdivided sub-module may be implemented using electronic hardware (e.g., a general-purpose processor, DSP, ASIC, FPGA, or other programmable logic device, discrete gate or transistor logic, discrete hardware components, etc.), computer software (which, for example, may be stored in random-access memory (RAM), flash memory, read-only memory (ROM), erasable programmable ROM (EPROM), etc.), or a combination of both.

According to various aspects of the present disclosure, an electronic device is further provided. The electronic device may be, for example, the terminal device shown in FIGS. 2A and 2B.

The electronic device may include an image capture device, one or more processors, and one or more memories, which may be connected via a system bus.

The image capture device may be, for example, a camera on the terminal device, which may perform image capture under the control of the processor. The image capture device may acquire, at a predetermined position in a predetermined space, one or more images for a plurality of speakers, where each of the plurality of speakers is included in at least one of the one or more images.

The one or more memories may have computer-readable instructions stored thereon, where the computer-readable instructions, when executed by the one or more processors, cause the one or more processors to perform the following operations: acquiring the one or more images; determining, for each of the one or more images, a distance between a speaker included in the image and the predetermined position based on an image height and a nominal height of the speaker included in the image and a focal length of the image capture device; determining distances between every two adjacent speakers of the plurality of speakers; and determining the speaker arrangement based on a distance between each of the plurality of speakers and the predetermined position and the distances between every two adjacent speakers.

Further details of the operations performed by the one or more processors may refer to the descriptions provided earlier with reference to FIGS. 2A to 6 and will not be repeated here.

As an example, the processor may include an integrated circuit chip with signal processing capabilities. The processor may be a general-purpose processor, a digital signal processor (DSP), an application-specific integrated circuit (ASIC), a field-programmable gate array (FPGA), or other programmable logic devices, discrete gates or transistor logic device, or discrete hardware components, so as to be configured to implement or execute the methods, steps, and logic block diagrams disclosed in the embodiments of the present disclosure. The processor may also include a memory or be combined with a memory. The memory may include a non-volatile storage medium and an internal memory. The non-volatile storage medium stores an operating system and may further store a computer-executable program that, when executed, can cause the vehicle-mounted computing device to implement the various operations described earlier. The internal memory may also store a computer-executable program that, when executed, can cause the computing device to perform the various operations described earlier.

The nonvolatile memory may be a read-only memory (ROM), a programmable read-only memory (PROM), an erasable programmable read-only memory (EPROM), an electrically erasable programmable read-only memory (EEPROM), or a flash memory. It should be noted that the memories for the methods described in the present disclosure are intended to include, but not limited to, these and any other suitable types of memories.

As used herein (including in the claims), the term "or" in an item list (e.g., a list of items followed by a phrase such as "at least one of" or "one or more of") indicates an inclusive list, such that, for example, a list of at least one of A, B, or C means A or B or C or AB or AC or BC or ABC (i.e., A and B and C). Similarly, as used herein, the phrase "based on" should not be interpreted as referencing a closed set of conditions. For example, an exemplary step described as "based on condition A" may be based on both condition A and condition B without departing from the scope of the present disclosure. In other words, as used herein, the phrase "based on" should be interpreted in the same manner as the phrase "at least partially based on".

In the drawings, similar components or features may have the same reference numerals. Additionally, individual components of the same type may be distinguished by appending a dash following the reference numeral and a second label differentiating between similar components. If only the first reference numeral is used in the description, the description may apply to any of the similar components having the same first reference numeral, regardless of the second reference numeral or other subsequent reference numerals.

The detailed description provided herein with reference to the drawings describes example configurations but does not represent all examples that may be implemented or fall within the scope of the claims. As used herein, the term "exemplary" means "serving as an example, instance, or illustration," but does not imply "preferred" or "advantageous over other examples". The detailed description includes specific details for providing a thorough understanding of the described techniques. However, these techniques may be practiced without these specific details. In some instances, well-known structures and devices are shown in block diagram form to avoid obscuring the concepts of the described examples.

The description provided herein enables those skilled in the art to implement or use the present disclosure. Various modifications to the present disclosure will be apparent to those of ordinary skill in the art, and the general principles defined herein may also be applied to other variations without departing from the scope of the present disclosure. Therefore, the present disclosure is not limited to the examples and designs described herein but should align with the broadest scope of the principles and novel features disclosed herein.

**Claims**

1. A method for determining a speaker arrangement of a plurality of speakers in a predetermined space, comprising:

   acquiring one or more images, wherein the one or more images are captured by an image capture device at a predetermined position in the predetermined space and each of the plurality of speakers is included in at least one of the one or more images;
   determining, for each of the one or more images, a distance between a speaker included in the image and the predetermined position based on an image height and a nominal height of the speaker included in the image and a focal length of the image capture device;
   determining distances between every two adjacent speakers of the plurality of speakers; and
   determining the speaker arrangement based on a distance between each of the plurality of speakers and the predetermined position and the distances between every two adjacent speakers.

2. The method according to claim 1, wherein in a case where the one or more images are a plurality of images, the plurality of images are sequentially captured by the image capture device during rotation, and each of the plurality of images comprises one speaker,

wherein determining distances between every two adjacent speakers of the plurality of speakers comprises: for every two sequentially captured images of the plurality of images, acquiring, from an angle sensor associated with the image capture device, information about a rotation angle traversed during capture of the two images; and determining a distance between speakers included in the two images based on the information about the rotation angle and distances between speakers included in the two images and the predetermined position.

3. The method according to claim 1, wherein in a case where the one or more images are a plurality of images, the plurality of images are captured by the image capture device, and each of the plurality of images comprises one speaker, wherein determining distances between every two adjacent speakers of the plurality of speakers comprises:

acquiring, from an orientation sensor associated with the image capture device, an orientation of the image capture device when capturing each of the plurality of images; determining angle differences between orientations corresponding to every two images; and determining, for every two images, a distance between speakers included in the two images based on an angle difference between orientations corresponding to the two images and distances between the speakers included in the two images and the predetermined position.

4. The method according to claim 1, wherein at least two adjacent speakers including a first speaker and a second speaker are included in a first image of the one or more images, wherein determining distances between every two adjacent speakers of the plurality of speakers comprises:

determining a pixel distance between the first speaker and the second speaker that are adjacent in the first image; determining an included angle between a first connection line from the first speaker to the predetermined position and a second connection line from the second speaker to the predetermined position based on the pixel distance and a position of an imaging plane of the image capture device; and determining a distance between the first speaker and the second speaker based on the included angle, a first distance between the first speaker and the predetermined position, and a second distance between the second speaker and the predetermined position.

5. The method according to claim 1, further comprising: for each of the plurality of speakers,

acquiring, based on a speaker model of the speaker input by a user, a nominal height corresponding to the speaker model from a database; or performing object recognition on an image containing the speaker to obtain a speaker model of the speaker, and acquiring a nominal height corresponding to the speaker model from the database based on the speaker model.

6. The method according to claim 1, further comprising:

determining one of the plurality of speakers as a central speaker based on at least one of a user input or the speaker arrangement, wherein an audio channel corresponding to each of the plurality of speakers other than the central speaker is determined based on standard channel definition rules and relative positional relationships between the other speakers in the speaker arrangement and the central speaker.

7. The method according to claim 1, wherein the method is executed by a terminal device, and the image capture device is a camera integrated at the terminal device.

8. An audio calibration method for a speaker system, wherein the speaker system comprises a plurality of speakers disposed in a predetermined space, and the method is executed at each of the plurality of speakers or at an audio manager configured to manage the plurality of speakers, and comprises:

acquiring a speaker arrangement of the plurality of speakers, the speaker arrangement being determined by the method according to any one of claims 1-7; and processing an input audio signal based on the speaker arrangement such that a processed audio signal is output at each speaker.

9. The method according to claim 8, wherein for each of the plurality of speakers, a delay and/or gain is applied to the processed audio signal output by the speaker, and the delay and/or gain is based on a distance of the speaker from the predetermined position.

10. An electronic device, comprising:

an image capture device acquiring, at a predetermined position in a predetermined space, one or more images for a plurality of speakers, wherein each of the plurality of speakers is included in at least one of the one or more images; one or more processors; and one or more memories having computer-readable instructions stored thereon, wherein the computer-readable instructions, when executed by the one or more processors, cause the one or more processors to:

> acquire the one or more images;
> determine, for each of the one or more images, a distance between a speaker in the image and the predetermined position based on an image height and a nominal height of the speaker in the image and a focal length of the image capture device;
> determine distances between every two adjacent speakers of the plurality of speakers; and
> determine the speaker arrangement based on a distance between each of the plurality of speakers and the predetermined position and the distances between every two adjacent speakers.

FIG. 1

200

**FIG. 2A**

50

**FIG. 2B**

300

S310

Acquiring one or more images, where the one or more images are captured by an image capture device at a predetermined position in the predetermined space and each of the plurality of speakers is included in at least one of the one or more images

S320

Determining, for each of the one or more images, a distance between a speaker included in the image and the predetermined position based on an image height and a nominal height of the speaker included in the image and a focal length of the image capture device

S330

Determining distances between every two adjacent speakers of the plurality of speakers

S340

Determining the speaker arrangement based on a distance between each of the plurality of speakers and the predetermined position and he distances between every two adjacent speakers

# FIG. 3

FIG. 4

FIG. 5

FIG. 6

700

| | |
|---|---|
| S710 | Acquiring a speaker arrangement of the plurality of speakers |
| S720 | Processing an input audio signal based on the speaker arrangement such that a processed audio signal is output at each speaker |

## FIG. 7

800

Acquisition module 810

Distance determination module 820

Arrangement determination module 830

## FIG. 8

## EUROPEAN SEARCH REPORT

**Application Number**

EP 25 18 6951

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/124447 A1 (PATIL SHARANAPPAGOUDA [IN]) 21 April 2022 (2022-04-21) | 1-5,7,10 | INV. H04S7/00 |
| Y | * paragraph [0019] - paragraph [0120]; figures 1-6 * | 1,6-10 | G06T7/50 G06T7/70 |
| | ----- | | |
| Y | US 2012/117502 A1 (NGUYEN DJUNG [US] ET AL) 10 May 2012 (2012-05-10) * paragraph [0035] - paragraph [0088]; figures 1-8 * | 1,6-10 | |
| | ----- | | |

**TECHNICAL FIELDS SEARCHED (IPC)**

H04S
G06T

The present search report has been drawn up for all claims

| Place of search | Date of completion of the search | Examiner |
|---|---|---|
| Munich | 12 November 2025 | Guillaume, Mathieu |

EPO FORM 1503 03.82 (P04C01)

## ANNEX TO THE EUROPEAN SEARCH REPORT
## ON EUROPEAN PATENT APPLICATION NO.

EP 25 18 6951

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2025

| Patent document cited in search report | Publication date | Patent family member(s) | | Publication date |
|---|---|---|---|---|
| US 2022124447 A1 | 21-04-2022 | NONE | | |
| US 2012117502 A1 | 10-05-2012 | US | 2012113224 A1 | 10-05-2012 |
| | | US | 2012114151 A1 | 10-05-2012 |
| | | US | 2012114152 A1 | 10-05-2012 |
| | | US | 2012117502 A1 | 10-05-2012 |
| | | US | 2015149943 A1 | 28-05-2015 |

EPO FORM P0459

For more details about this annex : see Official Journal of the European Patent Office, No. 12/82